# EUROPÄISCHE PATENTSCHRIFT

(11) **EP 3 577 445 B1**
(45) Veröffentlichungstag und Bekanntmachung des Hinweises auf die Patenterteilung: **17.07.2024**
(21) Anmeldenummer: 18701100.2
(22) Anmeldetag: 03.01.2018
(51) Int. Cl.: G01N 21/90

(54) **INSPEKTIONSVORRICHTUNG UND -VERFAHREN ZUR SEITENWAND- UND VERSCHLUSSKOPFINSPEKTION VON BEHÄLTERN**
INSPECTION DEVICE AND METHOD FOR INSPECTING THE LATERAL WALLS AND CLOSURE HEAD OF CONTAINERS
DISPOSITIF ET PROCÉDÉ D'INSPECTION POUR L'INSPECTION DE PAROIS LATÉRALES ET DE TÊTE DE FERMETURE DE RÉCIPIENTS

(30) Priorität: 03.02.2017 DE 102017201776
(43) Veröffentlichungstag der Anmeldung: 11.12.2019
(73) Patentinhaber: Krones AG, 93073 Neutraubling (DE)
(72) Erfinder: KWIRANDT, Rainer, 93073 Neutraubling (DE)
(74) Vertreter: Grünecker Patent- und Rechtsanwälte PartG mbB
(86) Internationale Anmeldenummer: PCT/EP2018/050116
(87) Internationale Veröffentlichungsnummer: WO 2018/141495

(56) Entgegenhaltungen:
- EP-A1- 0 663 069
- EP-A1- 1 477 794
- EP-A1- 1 985 997
- DE-A1- 102014 104 078
- DE-U1- 29 606 592
- DE-U1- 29 919 761
- JP-A- H09 218 166

## Beschreibung

Die Erfindung betrifft eine Inspektionsvorrichtung zur Seitenwand- und Verschlusskopfinspektion von Behältern mit einem Lineartransporteur zum Transport der Behälter entlang einer linearen Transportbahn und mit mehreren entlang der linearen Transportbahn angeordneten Inspektionsstationen und ein Inspektionsverfahren zur Seitenwand- und Verschlusskopfinspektion von Behältern.

Üblicherweise werden Inspektionsvorrichtungen und -verfahren zur Seitenwandinspektion eingesetzt, um vor dem Befüllen beschädigte oder unsaubere Flaschen zu erkennen und auszuscheiden. Dazu werden die Behälter mit einem Lineartransporteur entlang einer linearen Transportbahn transportiert und von mehreren daran angeordneten Inspektionsstationen inspiziert. Die Inspektionsstationen weisen jeweils auf einer Seite der Transportbahn eine Leuchteinheit zum Durchleuchten der Behälter und auf der dazu gegenüberliegenden Seite der Transportbahn eine erste Kamera mit einem vorgeschalteten Spiegelkabinett auf, um mehrere Behälterseiten im Durchlicht gleichzeitig zu erfassen.

Aus der EP 0 663 069 B1 ist beispielsweise eine Inspektionsmaschine für durchleuchtete Flaschen mit einer Inspektionsstation zur Seitenwandkontrolle bekannt, wobei die zu prüfende Flasche mit einer Beleuchtungseinrichtung durchleuchtet und von einer Bildaufnahmeeinrichtung mit einer vorgeschalteten Spiegelanordnung aus mehreren Richtungen schräg von unten her erfasst wird. Außerdem ist der Inspektionsstation eine weitere Kamera zur Kontrolle der Kontur und/oder Höhe und/oder Farbe der zu prüfenden Flasche zugeordnet, deren Strahlengang zwischen der Spiegelanordnung verläuft und die einen oberen Teil der Flasche schräg von unten her erfasst.

Darüber hinaus sind Inspektionsvorrichtungen und -verfahren zur Verschlusskopfinspektion bekannt, um Beschädigungen an den Verschlussköpfen der Behälter zu erkennen. Beispielsweise werden dabei Beschädigungen am Gewinde, an der Mündungsfläche und/oder am Tragring erkannt. Bekannt sind dazu Inspektionsvorrichtungen, bei denen eine Leuchtfläche auf einer Seite und zwei Kameras auf der gegenüberliegenden Seite der Transportbahn angeordnet sind. Zudem ist die eine Kamera schräg entgegen und die andere Kamera schräg mit der Transportrichtung von oben her auf die Mündungsfläche des zu inspizierenden Behälters gerichtet. Die gegenüberliegende Leuchtfläche dient für beide Kameras als Bildhintergrund.

Üblicherweise sind derartige Inspektionsvorrichtungen zur Seitenwandinspektion bzw. zur Verschlusskopfinspektion innerhalb einer Maschine entlang der Transportbahn sequenziell nacheinander angeordnet.

Nachteilig dabei ist, dass der Platzbedarf bei den bekannten Inspektionsvorrichtungen zur Seitenwand- bzw. Verschlusskopfinspektion hoch ist und eine entsprechende Stellfläche erfordert. Darüber hinaus erfordert die Anordnung der beiden Kameras in der Inspektionsvorrichtung zur Verschlusskopfinspektion eine entsprechend lange Leuchtfläche, um einen gleichmäßigen Hintergrund zur Durchleuchtung des Verschlusskopfs zu bilden. Folglich sind die bekannten Vorrichtungen und Verfahren entsprechend kostenintensiv.

Die JP H09-218166 A offenbart ein Verfahren und eine Vorrichtung zur Inspektion einer Behältermündung.

Aufgabe der vorliegenden Erfindung ist es daher, eine Inspektionsvorrichtung und ein Inspektionsverfahren zur Seitenwand- und Verschlusskopfinspektion von Behältern bereitzustellen, die im Hinblick auf den benötigten Bauraum kostengünstiger ausgebildet sind.

Zur Lösung dieser Aufgabenstellung stellt die Erfindung eine Inspektionsvorrichtung mit den Merkmalen des Anspruchs 1 bereit. Vorteilhafte Ausführungsformen der Erfindung sind in den Unteransprüchen genannt.

Dadurch, dass die Inspektionsstationen jeweils mit einer zweiten Kamera zur Verschlusskopfinspektion der Behälter ausgebildet sind, erfolgt zusätzlich zur Seitenwandinspektion auch die Verschlusskopfinspektion in den Inspektionsstationen. Zudem ist die zweite Kamera jeweils in das zugeordnete Spiegelkabinett integriert, so dass der für die Seitenwand- bzw. Verschlusskopfinspektion erforderliche Bauraum zusammen genutzt werden kann. Dadurch, dass die Blickrichtung der zweiten Kamera durch das Fenster des Spiegelkabinetts hindurch von schräg oben auf die Mündungsfläche des zu inspizierenden Verschlusskopfs ausgerichtet ist, schützt das Fenster des Spiegelkabinetts die zweite Kamera einerseits vor Fremdeinwirkungen und andererseits ist dafür kein eigenes Gehäuse notwendig. Es verringert sich also insgesamt der für die Inspektionsvorrichtung notwendige Bauraum und die zweite Kamera ist dennoch vor Fremdeinwirkungen besonders gut geschützt.

Die Inspektionsvorrichtung kann in einer Getränkeverarbeitungsanlage angeordnet sein. Die Inspektionsvorrichtung kann einer Behälterherstellungsanlage (beispielsweise einer Streckblasmaschine), einem Rinser, einer Sortiermaschine, einer Leerflascheninspektionsmaschine, einer Vollflascheninspektionsmaschine, einem Füller, einem Verschließer und/oder einer Verpackungsmaschine zugeordnet sein.

Die Behälter können dazu vorgesehen sein, Getränke, Nahrungsmittel, Hygieneartikel, Pasten, chemische, biologische und/oder pharmazeutische Produkte aufzunehmen. Die Behälter können Kunststoffflaschen, Glasflaschen, Dosen und/oder Tuben sein. Bei Kunststoffbehältern kann es sich im speziellen um PET-, PEN-, HD-PE- oder PP-Behälter bzw. Flaschen handeln. Ebenso kann es sich um biologisch abbaubare Behälter oder Flaschen handeln, deren Hauptbestandteile aus nachwachsenden Rohstoffen wie zum Beispiel Zuckerrohr, Weizen oder Mais bestehen. Die Behälter können jeweils einen Verschlusskopf umfassen.

Mit Seitenwandinspektion kann hier die Inspektion des Behälterkörpers, insbesondere des Behälterbereichs zwischen Behälterboden und Verschlusskopf umfassen. Anders ausgedrückt kann die Seitenwandinspektion alle Behälterbereiche außer dem Verschlusskopf umfassen.

Der Verschlusskopf kann ein Behältermündungsbereich sein. Der Verschlusskopf kann alle Behälterelemente entlang der Mündung, zum Verschließen und zum Behältertransport am Hals (Neck-Handling) umfassen. Der Verschlusskopf kann Gewindegänge, eine Mündungsfläche, eine Dichtfläche, Entlastungsschlitze und/oder einen Tragring umfassen. Mit Verschlusskopfinspektion kann hier die Inspektion des Verschlusskopfs, vorzugsweise von Strukturen im Bereich der Behältermündung gemeint sein. Derartige Strukturen können beispielsweise die Gewindegänge, die Mündungsfläche, die Dichtfläche, die Entlastungsschlitze, und/oder den Tragring umfassen.

Der Lineartransporteur kann ein Förderband und/oder Riemen zur Förderung von Behältern umfassen, um die Behälter entlang der linearen Transportbahn zu transportieren. Denkbar ist auch, dass die Inspektionsvorrichtung Behälteraufnahmen umfasst, um die Behälter sicherer zu transportieren und/oder gegenüber der Kamera zu verdrehen und/oder zu verschieben.

Die Inspektionsstationen können jeweils eine oder mehrere Trägerstrukturen umfassen, an der oder an denen die Leuchteinheit, die erste Kamera, das Spiegelkabinett und die zweite Kamera angeordnet sind. Denkbar ist auch, dass die Inspektionsstationen paarweise gegenüberliegend entlang der linearen Transportbahn angeordnet sind, wobei vorzugsweise die Leuchteinheit der einen Inspektionsstation mit dem Spiegelkabinett, der ersten Kamera und der zweiten Kamera der anderen Inspektionsstation an einer vorzugsweise eingehausten Trägerstruktur integriert angeordnet ist. In diesem Fall ist denkbar, dass das Fenster sowohl für die Erfassung der mehreren Behälterseiten durch das Spiegelkabinett und die erste Kamera, für die Verschlusskopfinspektion mit der zweiten Kamera der einen Inspektionsstation als auch für die Leuchteinheit der anderen Inspektionsstation genutzt wird. Denkbar ist auch, dass das Fenster für die zweite Kamera und eine weiteres Fenster für das Spiegelkabinett und die erste Kamera vorhanden sind.

Es versteht sich, dass die den Inspektionsstationen zugeordneten Einheiten, wie die Leuchteinheit, die erste Kamera, das Spiegelkabinett, die zweite Kamera, das Fenster, usw. jeweils pro Inspektionsstation wenigstens einmal vorhanden sein können. Die Inspektionsstation können dazu ausgebildet sein jeweils einen der Behälter zu einem bestimmten Zeitpunkt zu inspizieren. Nach der Inspektion des zu inspizierenden Behälters kann ein weiterer Behälter als zu inspizierender Behälter mit dem Lineartransporteur zu der jeweiligen Inspektionsstation transportiert werden.

Die Leuchteinheit zum Durchleuchten der Behälter kann eine lichtabstrahlende Leuchtfläche umfassen, um einen flächigen Bildhintergrund für die Behälterseiten und/oder den zu inspizierenden Verschlusskopf zu bilden. Beispielsweise kann die Leuchtfläche im Wesentlichen rechteckig ausgebildet sein und/oder in der Höhe bzw. Breite wenigstens so groß wie die von der ersten Kamera erfassten Behälterseiten oder der gesamte zu inspizierende Behälter. Die Leuchteinheit kann eine Lichtquelle, vorzugsweise mehrere LEDs zur Lichterzeugung und/oder eine Streuscheibe als Lichtaustrittsfläche umfassen.

Dass "das Spiegelkabinett zur Erfassung mehrerer Behälterseiten der durchleuchteten Behälter ausgebildet ist" kann hier bedeuten, dass mit dem Spiegelkabinett von jedem durchleuchteten Behälter jeweils mehrere Behälterseiten erfasst werden. Das Spiegelkabinett umfasst mehrere Umlenkspiegel, um wenigstens zwei Strahlengänge zu bilden, die jeweils eine Behälterseite eines durchleuchteten Behälters in die erste Kamera abbilden. Vorzugsweise können die wenigstens zwei Strahlengänge Nutzstrahlengänge sein, die jeweils genau eine Behälterseite des durchleuchteten Behälters in die erste Kamera abbilden. Die wenigstens zwei Strahlengänge können im Wesentlichen gleich lang ausgebildet sein. Die wenigstens zwei Strahlengänge können eine erste Behälterseite von schräg vorne und eine zweite Behälterseite von schräg hinten in die erste Kamera hinein abbilden. Die zweite Kamera kann in einem Totraum zwischen den wenigstens zwei Strahlengängen angeordnet sein. Denkbar ist auch, dass die zweite Kamera oberhalb oder unterhalb der wenigstens zwei Strahlengänge, vorzugsweise der wenigstens zwei Nutzstrahlengänge angeordnet ist. Anders ausgedrückt, kann die zweite Kamera in einen Bereich des Kamerabilds der ersten Kamera hinein abgebildet werden, der vollständig neben den abgebildeten Behälterseiten liegt und damit die Seitenwandinspektion nicht stört.

Die erste und/oder die zweite Kamera können als CCD- oder CMOS-Kamera ausgebildet sein. Die erste und/oder zweite Kamera können jeweils mit einem Objektiv und einem matrixartigen (flächigen) Bildsensor ausgebildet sein. Vorzugsweise können die erste und/oder zweite Kamera mit einer oder mehreren Bildverarbeitungseinrichtungen verbunden sein, um die erfassten Kamerabilder zur Seitenwand- und Verschlusskopfinspektion auszuwerten. Vorzugsweise kann die eine oder die mehreren Bildverarbeitungseinrichtungen in eine Maschinensteuerung integriert sein.

"Dass die zweite Kamera in das zugeordnete Spiegelkabinett integriert ... ist" bedeutet hier, dass die zweite Kamera und das zugeordnete Spiegelkabinett eine gemeinsame Trägerstruktur und/oder ein gemeinsames Gehäuse aufweisen. Mit "zugeordnete Spiegelkabinett" kann hier das Spiegelkabinett derselben Inspektionsstation gemeint sein. Dass "die zweite Kamera ... mit Blickrichtung ... von schräg oben auf die Mündungsfläche des Verschlusskopfs des zu inspizierenden Behälters ausgerichtet ist" bedeutet hier, dass die zweite Kamera auf die Mündungsfläche und in den Verschlusskopf hineinschauend auf den zu inspizierenden Behälter ausgerichtet ist. Vorzugsweise werden die Behälter dazu stehend auf dem als Förderband ausgebildeten Lineartransporteur transportiert. "Von oben" kann hier bedeuten, dass die Blickrichtung wenigstens eine Komponente in Richtung der Schwerkraft aufweist.

Die Leuchteinheit kann auch zum Durchleuchten des Verschlusskopfs des zu inspizierenden Behälters ausgebildet sein. Denkbar ist auch, dass die Inspektionsstation eine separate Leuchteinheit zum Durchleuchten des Verschlusskopfs umfasst.

Die Blickrichtung der zweiten Kamera kann quer, vorzugsweise senkrecht zu einer Transportrichtung des Lineartransporteurs ausgerichtet sein. Dadurch blickt die Kamera im Wesentlichen senkrecht auf eine Leuchtfläche zum Durchleuchten des Verschlusskopfs, die dadurch entlang der Transportrichtung besonders kompakt ausgebildet sein kann. Die Blickrichtung der zweiten Kamera kann also senkrecht auf die Lichtaustrittsfläche der Leuchteinheit ausgerichtet sein.

Die Blickrichtung der zweiten Kamera ist auf eine zusammenhängende Lichtaustrittsfläche der Leuchteinheit ausgerichtet, mit der die Behälter zur Seitenwandinspektion und zur Verschlusskopfinspektion durchleuchtet werden. Dadurch kann die Leuchteinheit sowohl zur Seitenwand- als auch zur Verschlusskopfinspektion genutzt werden. Anders ausgedrückt kann die Leuchteinheit dazu ausgebildet sein, sowohl die mehreren Behälterseiten (Seitenwand) als auch den Verschlusskopf des zu inspizierenden Behälters mit einer Lichtaustrittsfläche zu durchleuchten.

Das Fenster, die erste Kamera und das Spiegelkabinett können derart ausgebildet sein, dass auch die Erfassung der Behälterseiten des zu inspizierenden Behälters durch das Fenster des Spiegelkabinetts hindurch verläuft. Anders ausgedrückt kann das Fenster so groß ausgebildet sein, dass, vorzugsweise für den größten inspizierbaren Behälter, die Strahlengänge des Spiegelkabinetts von der ersten Kamera her auf die mehreren Behälterseiten und der Strahlengang der zweiten Kamera auf den Verschlusskopf durch das Fenster hindurch verlaufen. Zudem kann auch ein Strahlengang einer Leuchteinheit einer weiteren, gegenüberliegend an der Transportbahn angeordneten Inspektionsstation durch das Fenster verlaufen. Dadurch können die Inspektionsstation besonders kompakt aufgebaut werden.

Die erste Kamera, die zweite Kamera und Umlenkspiegel des Spiegelkabinetts können in einem gemeinsamen Gehäuse zum Schutz vor Verunreinigungen angeordnet sein. Zudem kann in dem Gehäuse die Leuchteinheit der weiteren, gegenüberliegend an der Transportbahn angeordneten Inspektionsstation angeordnet sein. Dadurch wird das Gehäuse besonders ökonomisch genutzt.

Zwischen wenigstens zwei der Inspektionsstationen kann eine Behälterdreheinheit angeordnet sein, um die Behälter um ihre Längsachsen zu drehen, vorzugsweise um 90°. Dadurch ist es möglich, die Seitenwand und den Verschlusskopf des Behälters vollumfänglich zu inspizieren. Die Behälterdreheinheit kann beispielsweise zwei Förderriemen umfassen, zwischen denen die Behälter aufgenommen und gefördert werden. Dabei können die beiden Förderriemen mit unterschiedlicher Fördergeschwindigkeit angetrieben sein, so dass sich die dazwischenliegenden Behälter beim Fördern um ihre Längsachsen drehen.

Zwei Inspektionsstationen können am Lineartransporteur in Transportrichtung paarweise gegenüberliegend angeordnet sein, wobei in Transportrichtung anschließend die Behälterdreheinheit angeordnet ist, um die Behälter um ihre Längsachse zu drehen, vorzugsweise um 90°, und wobei in Transportrichtung nach der Behälterdreheinheit zwei weitere Inspektionsstationen am Lineartransporteur paarweise gegenüberliegend angeordnet sind. Dadurch kann der zu inspizieren der Behälter mit den beiden ersten Inspektionsstationen von zwei gegenüberliegenden Seiten her inspiziert, dann um 90° gedreht und von zwei weiteren gegenüberliegenden und dazu senkrechten Seiten her inspiziert werden. Folglich kann eine vollumfängliche Inspektion der Seitenwände und des Verschlusskopfs erreicht werden.

Die zweite Kamera kann mit einer Höhenverstelleinheit auf unterschiedliche Behälterhöhen höhenverstellbar sein. Dadurch kann die zweite Kamera besonders einfach an die Behälterhöhe eines bestimmten Behältertyps angepasst werden.

Die Blickrichtung der zweiten Kamera und die Mündungsfläche des zu inspizierenden Verschlusskopfs schließen einen Winkel in einem Bereich von 25° - 55°, vorzugsweise in einem Bereich von 33° - 37°, weiterhin vorzugsweise 35° ein. Dadurch ist es möglich, die Blickrichtung der zweiten Kamera durch die Behältermündung hindurch auf einen Innenwandbereich des Verschlusskopfs zu richten. Folglich können die auf der Außenseite angeordneten Gewinderinge mit gleichmäßigem Bildhintergrund besonders gut erfasst werden, wodurch die Erkennung von Beschädigungen an den Gewinderingen besonders zuverlässig ist. Als Optimum hat sich bei umfangreichen Untersuchungen ein Winkel von 35° herausgestellt.

Eine Stirnfläche des Objektivs der zweiten Kamera kann einen Abstand zum Fenster des Spiegelkabinetts von maximal 30 mm, vorzugsweise in einem Bereich von 0-15 mm aufweisen. Dadurch kann ein größerer Winkelbereich der zur Kamera abgewandten Mündungswand erfasst und so die komplette Mündung von vier zweiten Kameras inspiziert werden. Zudem kann der Bauraum der Inspektionsstationen in der Höhe begrenzt werden. Für eine besonders einfache Montage der zweiten Kamera ist ein Abstand von 10 - 15 mm vorteilhaft.

Darüber hinaus stellt die Erfindung mit dem Anspruch 10 ein Inspektionsverfahren zur Seitenwand- und Verschlusskopfinspektion von Behältern bereit. Vorteilhafte Ausführungsformen der Erfindung sind in den Unteransprüchen genannt.

Dadurch, dass die Verschlussköpfe der Behälter zur Verschlusskopfinspektion erfasst werden, erfolgt zusätzlich zur Seitenwandinspektion auch die Verschlusskopfinspektion mit den Inspektionsstationen. Zudem ist die zweite Kamera jeweils in das zugeordnete Spiegelkabinett integriert, so dass der für die Seitenwand- bzw. Verschlusskopfinspektion erforderliche Bauraum zusammen genutzt werden kann. Dadurch, dass die Verschlussköpfe durch das Fenster des Spiegelkabinetts hindurch mit Blickrichtung von schräg oben auf die Mündungsfläche der Verschlussköpfe erfasst werden, schützt das Fenster des Spiegelkabinetts die zweite Kamera einerseits vor Fremdeinwirkungen und andererseits ist kein eigenes Gehäuse zur Verschlusskopfinspektion notwendig. Es verringert sich also insgesamt der für das Inspektionsverfahren notwendige Bauraum und die zweite Kamera ist dennoch vor Fremdeinwirkung besonders gut geschützt.

Das Inspektionsverfahren kann mit der zuvor beschriebenen Inspektionsvorrichtung, vorzugsweise nach einem der Ansprüche 1 - 9 durchgeführt werden. Darüber hinaus kann das Verfahren die zuvor in Bezug auf die Inspektionsvorrichtung beschriebenen Merkmale einzelnen oder in beliebigen Kombinationen sinngemäß umfassen.

Die Behälter können in einem ersten Paar Inspektionsstationen von zwei gegenüberliegenden Seiten her inspiziert, dann von einer Behälterdreheinheit um 90° gedreht und mit einem zweiten Paar Inspektionsstationen von zwei weiteren gegenüberliegenden Seiten her inspiziert werden. Dadurch können die Behälter, insbesondere die Seitenwand und der Verschlusskopf jeweils vollumfänglich von vier Seiten her inspiziert werden. Vorzugsweise können also die Behälter mit vier Inspektionsstationen von vier um 90° versetzten Seiten her inspiziert werden.

Weitere Merkmale und Vorteile der Erfindung werden nachfolgend anhand der in den Figuren dargestellten Ausführungsbeispiele näher erläutert. Dabei zeigt:
- Figur 1: eine erfindungsgemäßes Ausführungsbeispiel einer Inspektionsvorrichtung zur Seitenwand- und Verschlusskopfinspektion von Behältern in einer Draufsicht;
- Figur 2A: eine Detailansicht der in der Figur 1 dargestellten Inspektionsstation in einer Draufsicht; und
- Figur 2B: eine Detailansicht der in der Figur 1 dargestellten Inspektionsstation in einer seitlichen Ansicht.

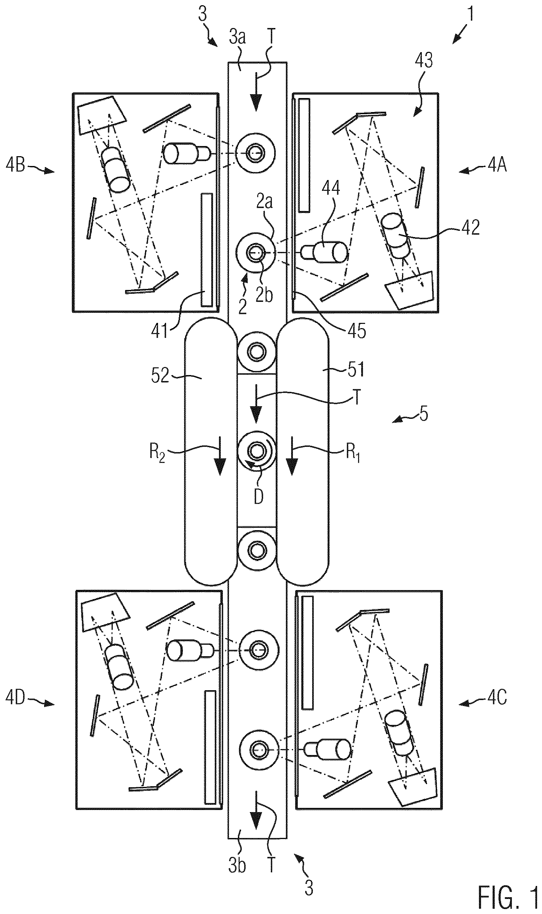

In der Figur 1 ist ein erfindungsgemäßes Ausführungsbeispiel einer Inspektionsstation 1 zur Seitenwand- und Verschlusskopfinspektion von Behältern 2 in einer Draufsicht dargestellt. Zu sehen ist der Lineartransporteur 3 zum Transport der Behälter 2 entlang einer linearen Transportbahn, der beispielsweise mit Förderbändern 3a, 3b ausgeführt ist, auf dem die Behälter 2 stehend in Transportrichtung T gefördert werden. Der Lineartransporteur 3 gliedert sich in das erste Förderband 3a, in die Behälterdreheinheit 5 und das zweite Förderband 3b. Zu sehen ist auch, dass entlang der linearen Transportbahn die Inspektionsstationen 4A, 4B paarweise gegenüberliegend am ersten Förderband 3a und nach der Behälterdreheinheit 5 die Inspektionsstationen 4C, 4D ebenfalls gegenüberliegend am zweiten Förderband 3b angeordnet sind.

Mit der Behälterdreheinheit 5 werden die Behälter 2 sowohl linear in Transportrichtung T transportiert als auch um ihre Behälterlängsachsen in der Drehrichtung D gedreht. Dazu umfasst die Behälterdreheinheit 5 die beiden Förderriemen 51, 52, zwischen denen die Behälter 2 aufgenommen und transportiert werden. Da die Geschwindigkeit R₁ des ersten Förderriemens 51 größer ist als die Geschwindigkeit R₂ des zweiten Förderriemens 52, wird ein dazwischen aufgenommener Behälter 2 sowohl in der Transportrichtung T gefördert als auch um seine Längsachse in Richtung D gedreht. Vorzugsweise dreht die Behälterdreheinheit 5 den Behälter 2 ab dem Verlassen des ersten Förderbands 3a bis zum Erreichen des zweiten Förderbands 3b um 90°. Dadurch kann jeder der Behälter 2 von vier um 90° versetzten Seiten her mit den Inspektionsstationen 4A - 4D inspiziert werden.

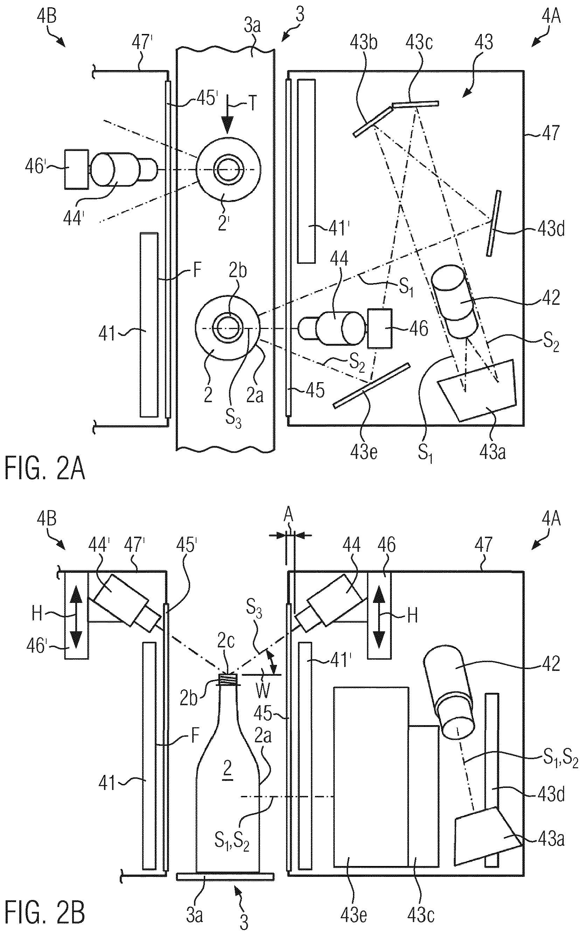

Die Inspektionsstationen 4A - 4D sind in gleicher Art und Weise mit denselben Einheiten aufgebaut und werden anhand der Figuren 2A - 2B näher erläutert. Darin ist eine Detailansicht der in der Figur 1 dargestellten Inspektionsstation 4A in einer Draufsicht bzw. seitlichen Ansicht dargestellt.

Zu sehen ist, dass die Inspektionsstationen 4A auf der einen Seite der Transportbahn des Lineartransporteurs 3 (in den Figuren 2A - 2B links) mit der Leuchteinheit 41 zum Durchleuchten des zu inspizierenden Behälters 2 und auf der dazu gegenüberliegenden Seite der Transportbahn (in den Figuren 2A - 2B rechts) mit der ersten Kamera 42 und dem Spiegelkabinett 43 zur Erfassung mehrerer Behälterseiten 2a der durchleuchteten Behälter 2 ausgebildet ist.

Ferner ist zu sehen, dass die Leuchteinheit 41 eine im Wesentlichen rechteckige Lichtaustrittsfläche F aufweist, die über die Behälterhöhe sowie entlang eines Inspektionsbereichs in Transportrichtung homogen Licht abstrahlt. Die Leuchteinheit 41 dient hier als homogen leuchtender Bildhintergrund für die Seitenwand- und Verschlusskopfinspektion. Mit dem von der Lichtaustrittsfläche F abgestrahlten Licht wird der Behälter 2 durchleuchtet.

Auf der anderen Seite der Transportbahn werden mehrere Behälterseiten 2a über das Spiegelkabinett 43 und die erste Kamera 42 erfasst. Das Spiegelkabinett 43 umfasst mehrere Umlenkspiegel 43a - 43f, so dass zwei getrennte Strahlengänge S₁, S₂ und damit zwei Behälterseiten 2a mit der ersten Kamera 42 in einem Kamerabild erfasst werden können. Der erste Strahlengang S₁ verläuft über die Umlenkspiegel 43a, 43b und 43c und der zweite Strahlengang S₂ über die Umlenkspiegel 43a, 43c und 43e. Im Kamerabild der ersten Kamera 42 entstehen so zwei nebeneinander angeordnete Bildbereiche, mit denen der Behälter 2 in Transportrichtung beispielsweise 30° von hinten und 30° von vorne erfasst wird. Folglich werden in diesem Beispiel zwei um 60° verdrehte Behälterseiten 2a in etwa senkrecht durchleuchtet. Der Behälterbereich der durch die zwei um 60° versetzten Behälterseiten 2a mit der Inspektionsstation 4A inspiziert wird, deckt einen Behälterumfang von wenigstens 90° ab. Zudem verlaufen die Strahlengänge S₁, S₂ durch das Fenster 45 hindurch, um das Spiegelkabinett 43 und die erste Kamera 42 vor Verschmutzungen zu schützen. Bei der Seitenwandinspektion wird dann in einer hier nicht genauer dargestellten Bildverarbeitungseinrichtung das Kamerabild auf Fremdstoffe und Beschädigung des Behälters 2 hin ausgewertet.

Darüber hinaus ist in den Figuren 2A - 2B zu sehen, dass die Inspektionsstation 4A mit der zweiten Kamera 44 zur Verschlusskopfinspektion des Behälters 2 ausgebildet ist. Zu sehen ist auch, dass die zweite Kamera 44 in das zugeordnete Spiegelkabinett 43 integriert und mit ihrer Blickrichtung S₃ durch das Fenster 45 des Spiegelkabinetts 43 hindurch von schräg oben auf eine Mündungsfläche 2c des zu inspizierenden Verschlusskopfs 2b ausgerichtet ist. Dazu schließt die Blickrichtung S₃ der zweiten Kamera 44 und die Mündungsfläche 2c des Verschlusskopfs 2b einen Winkel W von 35° ein. Folglich verläuft der Strahlengang S₃ der zweiten Kamera 44 durch die Behältermündung hindurch auf eine Innenseite des Verschlusskopfs 2b, so dass die daran außen angeordneten Gewindegänge von der Leuchteinheit 41 homogen durchleuchtet werden. Anders ausgedrückt erscheint die Lichtaustrittsfläche F der Leuchteinheit 41 hinter dem Verschlusskopf 2b als homogen leuchtender Bildhintergrund. Dadurch können beispielsweise Risse in den Gewindegängen zuverlässig erkannt werden.

Darüber hinaus beträgt der Abstand A zwischen der Stirnfläche des Objektivs der zweiten Kamera 44 zum Fenster 45 maximal 30 mm. Dadurch kann ein größerer Winkelbereich der zur zweiten Kamera 44 abgewandten Mündungswand erfasst und so die komplette Mündung von vier zweiten Kameras 44, 44', ... inspiziert werden. Zudem kann der Bauraum der Inspektionsstationen 4A - 4D in der Höhe begrenzt werden.

Zu sehen ist auch, dass die Blickrichtung S₃ der zweiten Kamera 44 senkrecht zu der Transportrichtung T des Lineartransporteurs 3 ausgerichtet ist. Dadurch kann die Leuchteinheit 41 in Transportrichtung T besonders kurz ausgeführt werden, wobei Bauraum eingespart wird. Darüber hinaus ist auch zu sehen, dass die Blickrichtung S₃ der zweiten Kamera 44 auf die zusammenhängende Lichtaustrittsfläche F der Leuchteinheit 41 ausgerichtet ist, mit der also die Behälter 2 sowohl zur Seitenwandinspektion (Spiegelkabinett 43 und erste Kamera 42) und zur Verschlusskopfinspektion (zweite Kamera 44) durchleuchtet werden.

Ferner ist die Höhenverstelleinheit 46 zu sehen, mit der die Kamera 44 entlang der Richtung H höhenverstellt werden kann, so dass sie an verschiedene Behälterhöhen anpassbar ist. Die Verstellungseinheit 46 kann motorisch oder manuell einstellbar ausgebildet sein. Beispielsweise kann sie einen ansteuerbaren Linearantrieb umfassen.

Weiter ist zu sehen, dass die erste Kamera 42, die zweite Kamera 44 und die Umlenkspiegel 43a - 43e des Spiegelkabinetts 43 in dem gemeinsamen Gehäuse 47 zum Schutz vor Verunreinigungen angeordnet sind. Das Fenster 45 bildet hier im Wesentlichen eine Seite des Gehäuses 47. Diese Komponenten sind an einer hier nicht genauer dargestellten, gemeinsam Tragstruktur befestigt. Folglich verläuft der Strahlengang S₃ der zweiten Kamera 44 ebenfalls durch das Fenster 45, um die zweite Kamera 44 vor Verschmutzungen zu schützen.

Die zweite, gegenüberliegende Inspektionsstation 4B ist hier nur teilweise dargestellt. Die der zweiten Inspektionsstation 4B zugeordnete Leuchteinheit 41' ist ebenfalls innerhalb des Gehäuses 47 angeordnet und an der gemeinsamen Tragstruktur befestigt. Umgekehrt befindet sich die der ersten Inspektionsstation 4A zugeordnete Leuchteinheit 41 innerhalb des anderen Gehäuses 47' zusammen mit der anderen zweiten Kamera 44', der anderen Höhenverstelleinheit sechsten 46' und weiteren hier nicht dargestellten Komponenten der zweiten Inspektionsstation 4B. Folglich wird die Leuchteinheit 41 durch das Fenster 45' vor Verschmutzungen geschützt.

Die in den Figuren 1, 2A und 2B dargestellte Inspektionsvorrichtung 1 wird wie folgt eingesetzt:
Die Behälter 2 werden mit dem Lineartransporteur 3 entlang der linearen Transportbahn zu den vier Inspektionsstationen 4A - 4B transportiert. Mit dem ersten Paar Inspektionsstationen 4A, 4B werden die Behälter zunächst von zwei gegenüberliegenden Seiten her inspiziert. Anschließend werden die Behälter 2 von der Behälterdreheinheit 5 um 90° gedreht und mit dem zweiten Paar Inspektionsstationen 4C, 4D von zwei weiteren gegenüberliegenden Seiten her inspiziert. Insgesamt werden also bei der Inspektion vier um 90° versetzte Seiten des zu inspizierenden Behälters bzw. seines Verschlusskopfs erfasst.

Bei der Seitenwandinspektion werden die Behälter mit den Inspektionsstationen 4A - 4D jeweils von einer Seite der Transportbahn her mit der Leuchteinheit 41 durchleuchtet und mehrere Behälterseiten 2a von der dazu gegenüberliegenden Seite der Transportbahn her mit dem Spiegelkabinett 43 und der ersten Kamera 42 erfasst.

Bei der Verschlusskopfinspektion werden die Verschlussköpfe der Behälter mit den Inspektionsstationen 4A - 4D jeweils von der in das zugeordnete Spiegelkabinett 43 integrierten, zweiten Kamera 44 durch das Fenster 45 des Spiegelkabinetts 43 hindurch mit Blickrichtung S₃ von schräg oben auf die Mündungsfläche 2c der Verschlussköpfe 2b erfasst.

Dadurch, dass die zweite Kamera 44 in das Spiegelkabinett 43 integriert ist und durch das Fenster 45 hindurch von schräg oben auf die Mündungsfläche 2c des Verschlusskopfs 2b gerichtet ist, wird also das Spiegelkabinett 43 für die Seitenwandinspektion vom Bauraum her zusätzlich auch für die Verschlusskopfinspektion genutzt. Zudem ist die Blickrichtung S₃ der zweiten Kamera 44 senkrecht zur Transportrichtung T des Lineartransporteurs 3 und damit auch senkrecht auf die Leuchteinheit 41 ausgerichtet. Insgesamt kann also die Inspektionsvorrichtung 1 entlang des Lineartransporteurs 3 besonders kurz und damit kompakt ausgebildet werden. Dadurch ist sie im Betrieb besonders kostengünstig.

Es versteht sich, dass in den zuvor beschriebenen Ausführungsbeispielen genannte Merkmale nicht auf diese Kombinationen beschränkt sind sondern auch einzelnen oder in beliebigen anderen Kombinationen möglich sind.

## Patentansprüche

1. Inspektionsvorrichtung (1) zur Seitenwand- und Verschlusskopfinspektion von Behältern (2), mit
- einem Lineartransporteur (3) zum Transport der Behälter (2) entlang einer linearen Transportbahn, und
- mit mehreren entlang der linearen Transportbahn angeordneten Inspektionsstationen (4A - 4D),
wobei die Inspektionsstationen (4A - 4D) zur Seitenwandinspektion jeweils auf einer Seite der Transportbahn mit einer Leuchteinheit (41) zum Durchleuchten eines zu inspizierenden Behälters (2) und auf einer dazu gegenüberliegenden Seite der Transportbahn mit einer ersten Kamera (42) und einem Spiegelkabinett (43) zur Erfassung mehrerer Behälterseiten (2a) des durchleuchteten und zu inspizierenden Behälters (2) ausgebildet sind,
wobei das Spiegelkabinett (43) mehrere Umlenkspiegel (43a - 43e) umfasst, um wenigstens zwei Strahlengänge (S₁, S₂) zu bilden, die jeweils eine Behälterseite des durchleuchteten Behälters (2) in die erste Kamera (42) abbilden,
wobei die Inspektionsstationen (4A - 4D) jeweils mit einer zweiten Kamera (44) zur Verschlusskopfinspektion der Behälter (2) ausgebildet sind, wobei die zweite Kamera (44) in das zugeordnete Spiegelkabinett (43) integriert ist, wobei die zweite Kamera (44) und das zugeordnete Spiegelkabinett (43) eine gemeinsame Trägerstruktur und/oder ein gemeinsames Gehäuse aufweisen,
wobei die zweite Kamera (44) so angeordnet ist, dass sie mit ihrer Blickrichtung (S₃) durch ein Fenster (45) des Spiegelkabinetts (43) hindurch von schräg oben auf eine Mündungsfläche (2c) eines Verschlusskopfs (2b) des zu inspizierenden Behälters (2) ausgerichtet ist, so dass die zweite Kamera (44) auf die Mündungsfläche (2c) und in den Verschlusskopf (2b) hineinschauend auf den zu inspizierenden Behälter (2) ausgerichtet ist, wobei die zweite Kamera (44) so angeordnet ist, dass ihre Blickrichtung (S₃) und die Mündungsfläche (2c) des zu inspizierenden Verschlusskopfs (2b) einen Winkel (W) in einem Bereich von 25° - 55 ° einschließen, und wobei die Blickrichtung (S₃) der zweiten Kamera (44) auf eine zusammenhängende Lichtaustrittsfläche (F) der Leuchteinheit (41) ausgerichtet ist, mit der die Behälter (2) zur Seitenwandinspektion und zur Verschlusskopfinspektion durchleuchtet werden.

2. Inspektionsvorrichtung (1) nach Anspruch 1, wobei die Blickrichtung (S₃) der zweiten Kamera (44) quer, vorzugsweise senkrecht zu einer Transportrichtung (T) des Lineartransporteurs (3) ausgerichtet ist.

3. Inspektionsvorrichtung (1) nach Anspruch 1 oder 2, wobei das Fenster (45), die erste Kamera (42) und das Spiegelkabinett (43) derart ausgebildet sind, dass auch die Erfassung der Behälterseiten (2a) des durchleuchteten Behälters (2) durch das Fenster (45) des Spiegelkabinetts (43) hindurch verläuft.

4. Inspektionsvorrichtung (1) nach einem der vorangegangenen Ansprüche, wobei die erste Kamera (42), die zweite Kamera (44) und Umlenkspiegel (43a -43e) des Spiegelkabinetts (43) in einem gemeinsamen Gehäuse (47) zum Schutz vor Verunreinigungen angeordnet sind.

5. Inspektionsvorrichtung (1) nach einem der vorangegangenen Ansprüche, wobei zwischen wenigstens zwei der Inspektionsstationen (4A - 4D) eine Behälterdreheinheit (5) angeordnet ist, um die Behälter (2) um ihre Längsachsen zu drehen, vorzugsweise um 90°.

6. Inspektionsvorrichtung (1) nach einem der vorangegangenen Ansprüche, wobei zwei Inspektionsstationen (4A, 4B) am Lineartransporteur (3) in Transportrichtung (T) paarweise gegenüberliegend angeordnet sind, wobei in Transportrichtung (T) anschließend eine Behälterdreheinheit (5) angeordnet ist, um die Behälter (2) um ihre Längsachse zu drehen, vorzugsweise um 90°, und wobei in Transportrichtung (T) nach der Behälterdreheinheit (5) zwei weitere Inspektionsstationen (4C, 4D) am Lineartransporteur (3) paarweise gegenüberliegend angeordnet sind.

7. Inspektionsvorrichtung (1) nach einem der vorangegangenen Ansprüche, wobei die zweite Kamera (44) mit einer Höhenverstelleinheit (46) auf unterschiedliche Behälterhöhen höhenverstellbar ist.

8. Inspektionsvorrichtung (1) nach einem der vorangegangenen Ansprüche, wobei die zweite Kamera so angeordnet ist, dass ihre Blickrichtung (S₃) und die Mündungsfläche (2c) des zu inspizierenden Verschlusskopfs (2b) einen Winkel (W) in einem Bereich von 33 ° - 37° einschließen.

9. Inspektionsvorrichtung (1) nach einem der vorangegangenen Ansprüche, wobei eine Stirnfläche eines Objektivs der zweiten Kamera (44) einen Abstand (A) zum Fenster (45) des Spiegelkabinetts (43) von maximal 30 mm, vorzugsweise in einem Bereich von 0 - 15 mm aufweist.

10. Inspektionsverfahren zur Seitenwand- und Verschlusskopfinspektion von Behältern, vorzugsweise mit einer Inspektionsvorrichtung nach einem der Ansprüche 1 - 9,
wobei die Behälter mit einem Lineartransporteur entlang einer linearen Transportbahn zu mehreren daran angeordneten Inspektionsstationen transportiert werden,
wobei die Behälter zur Seitenwandinspektion mit den Inspektionsstationen jeweils von einer Seite der Transportbahn her mit einer Leuchteinheit durchleuchtet und mehrere Behälterseiten von einer dazu gegenüberliegenden Seite der Transportbahn her mit einem Spiegelkabinett und einer ersten Kamera erfasst werden, wobei das Spiegelkabinett mehrere Umlenkspiegel umfasst, um wenigstens zwei Strahlengänge zu bilden, die jeweils eine Behälterseite des durchleuchteten Behälters in die erste Kamera abbilden,
wobei Verschlussköpfe der Behälter zur Verschlusskopfinspektion mit den Inspektionsstationen jeweils von einer in das zugeordnete Spiegelkabinett integrierten zweiten Kamera durch ein Fenster des Spiegelkabinetts hindurch mit Blickrichtung von schräg oben auf Mündungsflächen der Verschlussköpfe erfasst werden, so dass die zweite Kamera auf eine Mündungsfläche und in einen Verschlusskopf eines zu inspizierenden Behälters hineinschaut, wobei die Blickrichtung der zweiten Kamera und die Mündungsfläche des zu inspizierenden Verschlusskopfs einen Winkel in einem Bereich von 25° - 55 ° einschließen, wobei die Blickrichtung der zweiten Kamera auf eine zusammenhängende Lichtaustrittsfläche der Leuchteinheit ausgerichtet ist, mit der die Behälter zur Seitenwandinspektion und zur Verschlusskopfinspektion durchleuchtet werden, und
wobei die zweite Kamera und das zugeordnete Spiegelkabinett eine gemeinsame Trägerstruktur und/oder ein gemeinsames Gehäuse aufweisen.

11. Inspektionsverfahren nach Anspruch 10, wobei die Behälter von einem ersten Paar Inspektionsstationen von zwei gegenüberliegenden Seiten her inspiziert, dann von einer Behälterdreheinheit um 90° gedreht und mit einem zweiten Paar Inspektionsstationen von zwei weiteren gegenüberliegenden Seiten her inspiziert werden.

12. Inspektionsverfahren nach Anspruch 10 oder 11, wobei die Behälter mit vier Inspektionsstationen von vier um 90° versetzten Seiten her inspiziert werden.

## Claims

1. An inspection apparatus (1) for inspecting side walls and cap heads of containers (2), comprising:
- a linear conveyor (3) for transporting the containers (2) along a linear transport path, and
- a plurality of inspection stations (4A-4D) arranged along the linear transport path
wherein the inspection stations (4A-4D) for inspecting side walls are formed with a lighting unit (41) for illuminating a container (2) to be inspected on one side of the transport path and with a first camera (42) and a mirror assembly (43) for detecting multiple sides (2a) of the illuminated container (2) on an opposite side of the transport path,
wherein the mirror assembly (43) comprises a plurality of deflecting mirrors (43a -43e) for forming at least two beam paths (S₁, S₂) into the first camera (42) each imaging one side of the illuminated container (2),
wherein the inspection stations (4A -4D) are each formed with a second camera (44) for inspection of cap heads of containers (2), the second camera (44) being integrated into the associated mirror assembly (43) and wherein the second camera (44) and the associated mirror assembly (43) share a common support structure and/or a common housing,
wherein the second camera (44) is arranged to be oriented with its viewing direction (S₃) through a window (45) of the mirror assembly (43) obliquely down onto an opening surface (2c) of a cap head (2b) of the container (2) to be inspected so that the second camera (44) is oriented towards the container (2) to be inspected and directed onto the opening surface (2c) and into the cap head (2b), wherein the second camera (44) is arranged such that its viewing direction (S₃) and the opening surface (2c) of the cap head (2b) to be inspected enclose an angle (W) in a range between 25° and 55°, and wherein the viewing direction (S₃) of the second camera (44) is directed towards a continuous light emission surface (F) of the lighting unit (41) for illuminating the containers (2) in order to inspect the side walls and the cap heads.

2. The inspection apparatus (1) according to claim 1, wherein the viewing direction (S₃) of the second camera (44) is orientated transversely, preferably perpendicularly to a transport direction (T) of the linear conveyor (3).

3. The inspection apparatus (1) according to claim 1 or 2, wherein the window (45), the first camera (42) and the mirror assembly (43) are configured so that the detection of the sides (2a) of the illuminated container (2), too, is carried out through the window (45) of the mirror assembly (43).

4. The inspection apparatus (1) according to any one of the preceding claims, wherein the first camera (42), the second camera (44) and deflecting mirrors (43a -43e) of the mirror assembly (43) are arranged in a common housing (47) for protection against contamination.

5. The inspection apparatus (1) according to any one of the preceding claims, wherein a container rotating unit (5) is arranged between at least two of the inspection stations (4A - 4D) for rotating the containers (2) about their longitudinal axes, preferably by 90°.

6. The inspection apparatus (1) according to any one of the preceding claims, wherein two inspection stations (4A, 4B) are arranged in pairs facing each other along the linear conveyor (3) in the transport direction (T), wherein a container rotating unit (5) is arranged downstream in the transport direction (T) for rotating the containers (2) about their longitudinal axis, preferably by 90°, and wherein two additional inspection stations (4C, 4D) are arranged in pairs facing each other along the linear conveyor (3) downstream of the container rotating unit (5) in the transport direction (T).

7. The inspection apparatus (1) according to any one of the preceding claims, wherein the second camera (44) is height-adjustable to different container heights by means of a height adjustment unit (46).

8. The inspection apparatus (1) according to any one of the preceding claims, wherein the second camera is arranged so that its viewing direction (S₃) and the opening surface (2c) of the cap head (2b) to be inspected enclose an angle (W) in a range between 33° and 37°.

9. The inspection apparatus (1) according to any one of the preceding claims, wherein an end face of a lens of the second camera (44) has a distance (A) from the window (45) of the mirror assembly (43) of at most 30 mm, preferably in a range between 0 and 15 mm.

10. An inspection method for inspecting side walls and cap heads of containers, preferably with an inspection apparatus according to any one of the claims 1-9,
wherein the containers are transported by a linear conveyor along a linear transport path to a plurality of inspection stations arranged therealong,
wherein for inspecting side walls with the inspection stations the containers are illuminated from one side of the transport path with a lighting unit and multiple container sides are detected from an opposite side thereto of the transport path by means of a mirror assembly and a first camera, wherein the mirror assembly comprises a plurality of deflecting mirrors for forming a at least two beam paths into the first camera each imaging one side of the illuminated container,
wherein for inspecting cap heads with the inspection stations cap heads of the containers are detected by a second camera integrated into the associated mirror assembly through a window of the mirror assembly, its viewing direction being from obliquely down onto mouth surfaces of the cap heads from above so that the second camera is directed onto an opening surface and into a cap head of a container to be inspected, wherein the viewing direction of the second camera and the mouth surface of the closure head to be inspected enclose an angle in a range between 25° and 55°, wherein the viewing direction of the second camera is orientated towards a continuous light emission surface of the lighting unit for illuminating the containers in order to inspect the side walls and the cap heads, and wherein the second camera and the associated mirror assembly share a common support structure and/or a common housing.

11. The inspection method according to claim 10, wherein the containers are inspected by a first pair of inspection stations from two opposite sides, are then rotated by 90° by means of a container rotation unit and are afterwards inspected by a second pair of inspection stations from another two opposite sides.

12. The inspection method according to claims 10 or 11, wherein the containers are inspected by four inspection stations from four sides offset by 90°.

## Revendications

1. Dispositif d'inspection (1) permettant une inspection de paroi latérale et de tête de fermeture de récipients (2), comprenant
- un transporteur linéaire (3) permettant de transporter les récipients (2) le long d'un trajet de transport linéaire ; et
- plusieurs stations d'inspection agencées le long de la voie de transport linéaire (4A à 4D),
dans lequel les stations d'inspection (4A à 4D) permettant l'inspection de paroi latérale sont respectivement constituées, sur un côté de la voie de transport, d'une unité d'éclairage (41) permettant d'éclairer par transparence un récipient (2) à inspecter et, sur un côté opposé de la voie de transport, d'une première caméra (42) et d'une cabine à miroirs (43) permettant d'enregistrer plusieurs faces de récipient (2a) du récipient (2) à inspecter éclairé par transparence,
dans lequel la cabine à miroirs (43) comprend plusieurs miroirs de renvoi (43a à 43e) afin de former au moins deux trajets optiques (S₁, S₂) restituant dans la première caméra (42) respectivement une face de récipient du récipient (2) éclairé par transparence,
dans lequel les stations d'inspection (4A à 4D) sont respectivement constituées d'une seconde caméra (44) permettant d'inspecter la tête de fermeture du récipient (2), dans lequel la seconde caméra (44) est intégrée dans la cabine à miroirs (43) associée, dans lequel la seconde caméra (44) et la cabine à miroirs (43) associée présentent une structure porteuse commune et/ou une enveloppe commune,
dans lequel la seconde caméra (44) est agencée de sorte que sa direction de vision (S3) à travers une fenêtre (45) de la cabine à miroirs (43) est orientée de manière inclinée depuis le haut vers une surface d'embouchure (2c) d'une tête de fermeture (2b) du récipient (2) à inspecter, de sorte que la seconde caméra (44) est orientée vers la surface d'embouchure (2c), et vers le récipient (2) à inspecter en regardant dans la tête de fermeture (2b), dans lequel la seconde caméra (44) est agencée de sorte que sa direction de vision (S₃) et la surface d'embouchure (2c) de la tête de fermeture (2b) à inspecter forment un angle (W) situé dans une plage comprise entre 25° et 55°, et dans lequel la direction de vision (S₃) de la seconde caméra (44) est orientée vers une surface de sortie de lumière (F) concordante de l'unité d'éclairage (41), avec laquelle les récipients (2) sont éclairés par transparence en vue d'une inspection de paroi latérale et d'une inspection de tête de fermeture.

2. Dispositif d'inspection (1) selon la revendication 1, dans lequel la direction de vision (S₃) de la seconde caméra (44) est orientée de manière transversale, de manière préférée perpendiculaire, par rapport à une direction de transport (T) du transporteur linéaire (3).

3. Dispositif d'inspection (1) selon la revendication 1 ou 2, dans lequel la fenêtre (45), la première caméra (42) et la cabine à miroirs (43) sont réalisées de telle manière que l'enregistrement des faces de récipient (2a) du récipient (2) éclairé par transparence se fait également à travers la fenêtre (45) de la cabine à miroirs (43).

4. Dispositif d'inspection (1) selon l'une quelconque des revendications précédentes, dans lequel la première caméra (42), la seconde caméra (44) et les miroirs de renvoi (43a à 43e) de la cabine à miroirs (43) sont agencés au sein d'une enveloppe commune (47) permettant une protection contre les impuretés.

5. Dispositif d'inspection (1) selon l'une quelconque des revendications précédentes, dans lequel une unité de rotation de récipient (5) est agencée entre au moins deux des stations d'inspection (4A à 4D) afin de faire tourner, de manière préférée de 90°, les récipients (2) autour de leur axe longitudinal.

6. Dispositif d'inspection (1) selon l'une quelconque des revendications précédentes, dans lequel deux stations d'inspection (4A, 4B) sont agencées par paires de manière opposée au niveau du transporteur linéaire (3) dans la direction de transport (T), dans lequel une unité de rotation de récipient (5) est agencée à la suite dans la direction de transport (T) afin de faire tourner, de manière préférée de 90°, les récipients (2) autour de leur axe longitudinal, et dans lequel deux stations d'inspection (4C, 4D) supplémentaires sont agencées par paires de manière opposée au niveau du transporteur linéaire (3) après l'unité de rotation de récipient (5) dans la direction de transport (T).

7. Dispositif d'inspection (1) selon l'une quelconque des revendications précédentes, dans lequel la seconde caméra (44) est réglable en hauteur grâce à une unité de réglage en hauteur (46).

8. Dispositif d'inspection (1) selon l'une quelconque des revendications précédentes, dans lequel la seconde caméra est agencée de sorte que sa direction de vision (S₃) et la surface d'embouchure (2c) de la tête de fermeture (2b) à inspecter forment un angle (W) situé dans une plage comprise entre 33° et 37°.

9. Dispositif d'inspection (1) selon l'une quelconque des revendications précédentes, dans lequel une surface frontale d'un objectif de la seconde caméra (44) présente une distance (A) par rapport à la fenêtre (45) du cabinet à miroirs (43) d'au plus 30 mm, de manière préférée située dans une plage comprise entre 0 et 15 mm.

10. Procédé d'inspection permettant une inspection de paroi latérale et de tête de fermeture de récipients, de manière préférée grâce à un dispositif d'inspection selon l'une quelconque des revendications 1 à 9,
dans lequel les récipients sont transportés grâce à un transporteur linéaire le long d'une voie de transport linéaire vers plusieurs stations d'inspection agencées au niveau de ladite voie de transport linéaire,
dans lequel les récipients sont respectivement éclairés par transparence depuis un côté de la voie de transport grâce à une unité d'éclairage en vue d'une inspection de paroi latérale par les stations d'inspection et plusieurs faces de récipient sont enregistrées depuis un côté opposé de la voie de transport grâce à une cabine à miroirs et à une première caméra, dans lequel la cabine à miroirs comprend plusieurs miroirs de renvoi afin de former au moins deux trajets optiques restituant dans la première caméra respectivement une face de récipient du récipient éclairé par transparence,
dans lequel des têtes de fermeture des récipients sont respectivement enregistrées par une seconde caméra, intégrée dans la cabine à miroirs associée, à travers une fenêtre de la cabine à miroirs avec une direction de vision inclinée depuis le haut vers les surfaces d'embouchure des têtes de fermeture en vue de l'inspection de tête de fermeture grâce aux stations d'inspection, de sorte que la seconde caméra regarde vers une surface d'embouchure et dans une tête de fermeture d'un récipient à inspecter, dans lequel la direction de vision de la seconde caméra et la surface d'embouchure de la tête de fermeture à inspecter forment un angle situé dans une plage comprise entre 25° et 55°, dans lequel la direction de vision de la seconde caméra est orientée vers une surface de sortie de lumière concordante de l'unité d'éclairage, avec laquelle les récipients sont éclairés par transparence en vue d'une inspection de paroi latérale et d'une inspection de tête de fermeture, et
dans lequel la seconde caméra et la cabine à miroirs associée présentent une structure porteuse commune et/ou une enveloppe commune.

11. Procédé d'inspection selon la revendication 10, dans lequel les récipients sont inspectés par une première paire de stations d'inspection depuis deux côtés opposés, puis sont tournés de 90° par une unité de rotation de récipient et sont inspectés par une seconde paire de stations d'inspection depuis deux autres côtés opposés.

12. Procédé d'inspection selon la revendication 10 ou 11, dans lequel les récipients sont inspectés par quatre stations d'inspection depuis quatre côtés décalés de 90°.
